# EUROPEAN PATENT APPLICATION

(11) **EP 4 557 775 A1**
(43) Date of publication of application: **21.05.2025**
(21) Application number: 22950759.5
(22) Date of filing: 15.07.2022
(51) Int. Cl.: H04W 4/02, H04W 64/00

(54) **METHOD AND APPARATUS FOR DETERMINING POSITIONING-ASSISTED TERMINAL DEVICE**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/106125
(87) International publication number: WO 2024/011641

(57) **Abstract**

The present invention belongs to the technical field of communications. Provided are a method and apparatus for determining a positioning-assisted terminal device, and a device and a storage medium. The method includes: receiving information related to positioning assistance, which is sent by a second terminal device; and on the basis of the information related to positioning assistance, determining the second terminal device to be a positioning-assisted terminal device or a candidate positioning-assisted terminal device. In the present invention, a processing method is provided for the situation of "determination of a positioning-assisted terminal device", such that a positioning-assisted terminal device may be determined on the basis of information related to positioning assistance, and a discovery mechanism for the positioning-assisted terminal device is provided, thereby increasing the accuracy of determining the positioning-assisted terminal device.

## Description

### FIELD

The present invention relates to the field of communication technologies, and in particular to a method, apparatus, and device for determining a positioning-assisted terminal device and a storage medium.

### BACKGROUND

In a communication system, positioning that utilizes sidelink between a terminal device and another terminal device includes absolute positioning, relative positioning, and ranging. Among them, ranging usually only involves two terminal devices. That is, ranging is performed between two terminal devices, but the absolute positioning and the relative positioning may involve multiple auxiliary terminal devices to participate in positioning to improve an accuracy of the absolute positioning and the relative positioning. However, in the related art, it does not involve a mechanism for discovering positioning-assisted terminal device, so that determination of the positioning-assisted terminal device is not accurate enough.

### SUMMARY

The present invention provides a method, apparatus, and device for determining a positioning-assisted terminal device and a storage medium, to determine positioning-assisted terminal device according to positioning-assisted relevant information, and to provide a discovery mechanism for the positioning-assisted terminal device, thus improving am accuracy of determining the positioning-assisted terminal device.

According to an aspect of the present invention, there is provided a method for determining a positioning-assisted terminal device, performed by a first terminal device, including: receiving positioning-assisted relevant information sent by a second terminal device; and determining the second terminal device to be a positioning-assisted terminal device or a candidate positioning-assisted terminal device according to the positioning-assisted relevant information.

Optionally, in an embodiment of the present invention, the positioning-assisted relevant information includes type information of the second terminal device.

Optionally, in an embodiment of the present invention, the type information of the second terminal device includes at least one of: roadside unit type information; positioning-assisted terminal type information; fixed positioning-assisted terminal type information; infrastructure positioning-assisted terminal type information; temporary positioning-assisted terminal type information; or master positioning-assisted terminal type information.

Optionally, in an embodiment of the present invention, the positioning-assisted relevant information includes information related to position information of the second terminal device.

Optionally, in an embodiment of the present invention, the information related to the position information of the second terminal device includes at least one of: having global positioning system (GPS) or global navigation satellite system (GNSS) capability information; position information; detailed position information; GPS position information; GNSS position information; precise position information; or reliable position information.

Optionally, in an embodiment of the present invention, the positioning-assisted relevant information includes auxiliary positioning type information supported by the second terminal device.

Optionally, in an embodiment of the present invention, the auxiliary positioning type information supported by the second terminal device includes at least one of: an observed time difference of arrival (OTDOA); an uplink time difference of arrival (UTDOA); an angle-of-arrival (AOA); an angle-of-departure (AOD); an uplink angle-of-arrival (UL-AOA); a downlink angle-of-departure (DL-AOD); multiple round trip times (RTTs); a single sided RTT; a double sided RTT; a downlink time difference of arrival (DL-TDOA); an uplink time difference of arrival (UL-TDOA); a carrier phase; an enhanced cell identifier (ID); assisted GNSS positioning; wireless local area network (WLAN) positioning; Bluetooth positioning; barometer positioning; sensor positioning; ranging; absolute positioning; or relative positioning.

Optionally, in an embodiment of the present invention, the positioning-assisted relevant information includes information related to a network state of the second terminal device.

Optionally, in an embodiment of the present invention, the information related to the network state of the second terminal device includes at least one of: a serving cell corresponding to the second terminal device; information of the serving cell supporting sidelink communication or supporting sidelink communication of a limited service; the serving cell being located on a frequency that supports sidelink communication; on a frequency used for sidelink communication, the second terminal device being out of coverage; network connection quality information; network connection type information; serving cell identifier; or a message of the second terminal device performing sidelink communication.

Optionally, in an embodiment of the present invention, the network connection type information includes at least one of: long term evolution (LTE) network connection; new radio (NR) network connection; fixed network connection; or satellite network connection.

Optionally, in an embodiment of the present invention, the serving cell identifier includes at least one of: physical cell identifier (PCI); or global cell identifier (GCI).

Optionally, in an embodiment of the present invention, receiving the positioning-assisted relevant information sent by the second terminal device includes at least one of: receiving the positioning-assisted relevant information sent by the second terminal device via a proximity service (ProSe) message; receiving the positioning-assisted relevant information sent by the second terminal device via a radio resource control (RRC) message; receiving the positioning-assisted relevant information sent by the second terminal device via a PC5-S message; or receiving the positioning-assisted relevant information sent by the second terminal device via a sidelink LTE positioning protocol (LPP) message.

According to a further aspect of the present invention, there is provided a method for determining a positioning-assisted terminal device, performed by a second terminal device, including: sending positioning-assisted relevant information to a first terminal device, where the positioning-assisted relevant information is used to indicate that the second terminal device is a positioning-assisted terminal device or a candidate positioning-assisted terminal device.

Optionally, in an embodiment of the present invention, the positioning-assisted relevant information includes type information of the second terminal device.

Optionally, in an embodiment of the present invention, the type information of the second terminal device includes at least one of: roadside unit type information; positioning-assisted terminal type information; fixed positioning-assisted terminal type information; infrastructure positioning-assisted terminal type information; temporary positioning-assisted terminal type information; or master positioning-assisted terminal type information.

Optionally, in an embodiment of the present invention, the positioning-assisted relevant information includes information related to position information of the second terminal device.

Optionally, in an embodiment of the present invention, the information related to the position information of the second terminal device includes at least one of: having global positioning system (GPS) or global navigation satellite system (GNSS) capability information; position information; detailed position information; GPS position information; GNSS position information; precise position information; or reliable position information.

Optionally, in an embodiment of the present invention, the positioning-assisted relevant information includes auxiliary positioning type information supported by the second terminal device.

Optionally, in an embodiment of the present invention, the auxiliary positioning type information supported by the second terminal device includes at least one of: an observed time difference of arrival (OTDOA); an uplink time difference of arrival (UTDOA); an angle-of-arrival (AOA); an angle-of-departure (AOD); an uplink angle-of-arrival (UL-AOA); a downlink angle-of-departure (DL-AOD); multiple round trip times (RTTs); a single sided RTT; a double sided RTT; a downlink time difference of arrival (DL-TDOA); an uplink time difference of arrival (UL-TDOA); a carrier phase; an enhanced cell identifier (ID); assisted GNSS positioning; wireless local area network (WLAN) positioning; Bluetooth positioning; barometer positioning; sensor positioning; ranging; absolute positioning; or relative positioning.

Optionally, in an embodiment of the present invention, the positioning-assisted relevant information includes information related to a network state of the second terminal device.

Optionally, in an embodiment of the present invention, the information related to the network state of the second terminal device includes at least one of: a serving cell corresponding to the second terminal device; information of the serving cell supporting sidelink communication or supporting sidelink communication of a limited service; the serving cell being located on a frequency that supports sidelink communication; on a frequency used for sidelink communication, the second terminal device being out of coverage; network connection quality information; network connection type information; serving cell identifier; or a message of the second terminal device performing sidelink communication.

Optionally, in an embodiment of the present invention, the network connection type information includes at least one of: long term evolution (LTE) network connection; new radio (NR) network connection; fixed network connection; or satellite network connection.

Optionally, in an embodiment of the present invention, the serving cell identifier includes at least one of: physical cell identifier (PCI); or global cell identifier (GCI).

Optionally, in an embodiment of the present invention, sending the positioning-assisted relevant information to the first terminal device includes at least one of: sending the positioning-assisted relevant information to the first terminal device via a proximity service (ProSe) message; sending the positioning-assisted relevant information to the first terminal device via a radio resource control (RRC) message; sending the positioning-assisted relevant information to the first terminal device via a PC5-S message; or sending the positioning-assisted relevant information to the first terminal device via a sidelink LTE positioning protocol (LPP) message.

In a further aspect of the present invention, there is provided an apparatus for determining a positioning-assisted terminal device, provided on a first terminal device side, including: a receiving module configured to receive positioning-assisted relevant information sent by a second terminal device; and a determining module configured to determine the second terminal device to be a positioning-assisted terminal device or a candidate positioning-assisted terminal device according to the positioning-assisted relevant information.

In a further aspect of the present invention, there is provided an apparatus for determining a positioning-assisted terminal device, provided on a second terminal device side, including: a sending module configured to send positioning-assisted relevant information to a first terminal device, where the positioning-assisted relevant information is used to indicate that the second terminal device is a positioning-assisted terminal device or a candidate positioning-assisted terminal device.

In a further aspect of the present invention, there is provided a first terminal device including: a processor, and a memory having stored therein a computer program that, when executed by the processor, causes the device to implement the method provided in the embodiments of one aspect described above.

In a further aspect of the present invention, there is provided a second terminal device including: a processor, and a memory having stored therein a computer program that, when executed by the processor, causes the device to implement the method provided in the embodiments of the other aspect described above.

In a further aspect of the present invention, there is provided a communication device including: a processor and an interface circuit. The interface circuit is configured to receive code instructions and transmit the code instructions to the processor; and the processor is configured to run the code instructions to implement the method provided in the embodiments of one aspect described above.

In a further aspect of the present invention, there is provided a communication device including: a processor and an interface circuit. The interface circuit is configured to receive code instructions and transmit the code instructions to the processor; and the processor is configured to run the code instructions to implement the method provided in the embodiments of the other aspect described above.

In a further aspect of the present invention, there is provided a computer-readable storage medium having stored therein instructions that, when executed, cause the method provided in the embodiments of one aspect to be implemented.

In a further aspect of the present invention, there is provided a computer-readable storage medium having stored therein instructions that, when executed, cause the method provided in the embodiments of the other aspect to be implemented.

In conclusion, in the embodiments of the present invention, the positioning-assisted relevant information sent by the second terminal device is received, and the second terminal device is determined to be the positioning-assisted terminal device or the candidate positioning-assisted terminal device according to the positioning-assisted relevant information. In the embodiments of the present invention, the positioning-assisted terminal device or the candidate positioning-assisted terminal device may be determined according to the positioning-assisted relevant information, thereby avoiding the situation that the positioning-assisted terminal device cannot be found, and thus the positioning-assisted terminal device may be determined. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

### BRIEF DESCRIPTION OF THE DRAWINGS

The above and/or additional aspects and advantages of the present invention will become apparent and more readily appreciated from the following descriptions made with reference to the drawings, in which:
FIG. 1 is a schematic diagram of an example of a method for determining a positioning-assisted terminal device provided by an embodiment of the present invention;
FIG. 2 is a flowchart of a method for determining a positioning-assisted terminal device provided by an embodiment of the present invention;
FIG. 3 is a flowchart of a method for determining a positioning-assisted terminal device provided by another embodiment of the present invention;
FIG. 4 is a flowchart of a method for determining a positioning-assisted terminal device provided by a further embodiment of the present invention;
FIG. 5 is a flowchart of a method for determining a positioning-assisted terminal device provided by a further embodiment of the present invention;
FIG. 6 is a flowchart of a method for determining a positioning-assisted terminal device provided by a further embodiment of the present invention;
FIG. 7 is a flowchart of a method for determining a positioning-assisted terminal device provided by a further embodiment of the present invention;
FIG. 8 is a flowchart of a method for determining a positioning-assisted terminal device provided by a further embodiment of the present invention;
FIG. 9 is a flowchart of a method for determining a positioning-assisted terminal device provided by a further embodiment of the present invention;
FIG. 10 is a flowchart of a method for determining a positioning-assisted terminal device provided by a further embodiment of the present invention;
FIG. 11 is a flowchart of a method for determining a positioning-assisted terminal device provided by a further embodiment of the present invention;
FIG. 12 is a flowchart of a method for determining a positioning-assisted terminal device provided by a further embodiment of the present invention;
FIG. 13 is a flowchart of a method for determining a positioning-assisted terminal device provided by a further embodiment of the present invention;
FIG. 14 is a schematic diagram of an apparatus for determining a positioning-assisted terminal device provided by an embodiment of the present invention;
FIG. 15 is a schematic diagram of an apparatus for determining a positioning-assisted terminal device provided by another embodiment of the present invention; and
FIG. 16 is a block diagram of a terminal device provided by an embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. They are merely examples of devices and methods consistent with some aspects of embodiments of the present invention as recited in the appended claims.

Terms used herein in the embodiments of the present invention are for the purpose of describing specific embodiments, but should not be construed to limit the embodiments of the present invention. As used in embodiments of the present invention and the appended claims, "a/an" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

Network elements or network functions involved in the embodiments of the present invention may be implemented by a separate hardware device or by software in a hardware device, which is not limited in the embodiments of the present invention.

Positioning based on sidelink between a terminal device (i.e., user equipment (UE)) and another terminal device (i.e., another UE) includes absolute positioning, relative positioning, and ranging. The absolute positioning is to determine absolute coordinates of the UE, the relative positioning is to determine coordinates of the UE relative to a reference point, and the ranging is to determine a distance and/or an angle of the UE relative to a reference point. The ranging usually happens between only two UEs, but the absolute positioning and the relative positioning may involve multiple auxiliary UEs to participate in positioning.

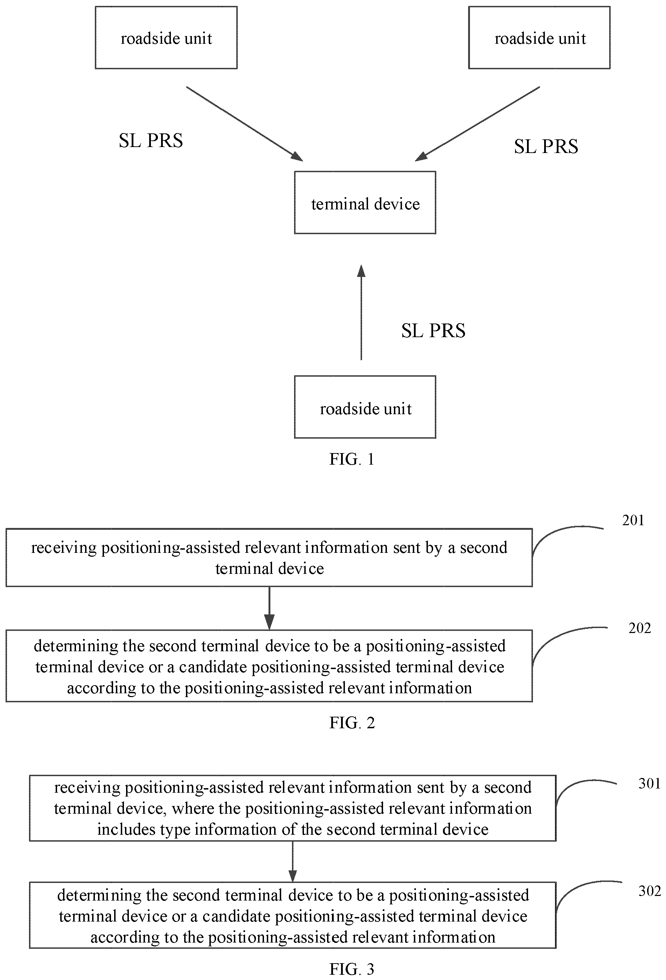

FIG. 1 is a schematic diagram of an example of a method for determining a positioning-assisted terminal device provided by an embodiment of the present invention. As shown in FIG. 1, taking a positioning method based on a downlink time difference of arrival (DL-TDOA) as an example, multiple roadside units (RSUs) may be set at a road side, and each roadside unit may, for example, correspond to fixed position information. The UE measures positioning signals sent by the multiple roadside units through sidelink, and determines, based on the positioning signals, a specific position of the UE relative to each RSU. The number of RSUs may be greater than or equal to three. For example, the positioning signal may include position information of the roadside unit. The UE may, for example, measure time differences of arrival of three positioning signals sent by three roadside units, and based on the time differences of arrival of the three positioning signals and position information of individual roadside units, the UE may determine the position information of the UE, or the position information of the UE relative to a certain roadside unit.

In addition to a DL-TDOA positioning solution, positioning solutions of an uplink angle-of-arrival (UL-AOA), multiple round trip times (RTTs), an angle-of-arrival (AOA), an angle-of-departure (AOD), and a carrier phase may exist. If a positioning result is not converted into absolute position coordinates based on absolute position information such as GPS of the RSU, the positioning result belongs to the relative positioning, otherwise, it belongs to the absolute positioning. The RSU that participates in the relative positioning or the absolute positioning is positioning-assisted UE.

In an embodiment of the present invention, if the positioning only involves two UEs, they are positioning-assisted UEs to each other.

In an embodiment of the present invention, there are different types of positioning-assisted UEs, including for example a RSU type positioning-assisted UE. The RSU type positioning-assisted UE belongs to an infrastructure that may provide a positioning service by cooperating with other RSUs. For example, an ordinary UE may be used as a positioning-assisted UE, but it is difficult for it to assist in providing the positioning service together with other UEs. In addition, some positioning-assisted UEs have position information such as GPS, which may assist other UEs in the absolute positioning. Further, some positioning-assisted UEs may not have the position information such as GPS.

A method, apparatus, device for determining a positioning-assisted terminal device and a storage medium provided by embodiments of the present invention will be described in detail below with reference to the accompanying drawings.

FIG. 2 is a flowchart of a method for determining a positioning-assisted terminal device provided by an embodiment of the present invention. The method is performed by a first terminal device and includes the following steps as shown in FIG. 2.

In step 201, positioning-assisted relevant information sent by a second terminal device is received.

In step 202, the second terminal device is determined to be a positioning-assisted terminal device or a candidate positioning-assisted terminal device according to the positioning-assisted relevant information
It should be noted that, in an embodiment of the present invention, the terminal device may be a device that provides voice and/or data connectivity to a user. The terminal device may communicate with one or more core networks via a radio access network (RAN). The terminal device may be an Internet of Things terminal, such as a sensor device, a mobile phone (or referred to as a "cellular" phone) and a computer with an Internet of Things terminal. For example, it may be a fixed, portable, pocket-sized, handheld, built-in computer or vehicle-mounted apparatus, for example, a station (STA), a subscriber unit, a subscriber station, a mobile station, a mobile, a remote station, an access point, a remote terminal, an access terminal, a user terminal, or a user agent. Alternatively, the terminal device may be a device of an unmanned aerial vehicle. Alternatively, the terminal device may be a vehicle-mounted device, for example, a driving computer with a wireless communication function, or a wireless communication device externally connected with a driving computer. Alternatively, the terminal device may be a roadside device, such as a street lamp, a signal lamp or other roadside devices with a wireless communication function.

In an embodiment of the present invention, the first terminal device may be, for example, a terminal device to be positioned, and the second terminal device may be a designated positioning-assisted terminal device or a candidate positioning-assisted terminal device, that is, the second terminal device is used to assist positioning. For example, when the second terminal device is determined to be a positioning-assisted terminal device, the first terminal device may measure a positioning signal sent by the second terminal device. For example, the first terminal device may determine position information of the first terminal device based on the positioning signal and the positioning method.

In an embodiment of the present invention, the positioning-assisted relevant information includes at least one of type information of the second terminal device; information related to position information of the second terminal device; auxiliary positioning type information supported by the second terminal device; or information related to a network state of the second terminal device.

In an embodiment of the present invention, the positioning-assisted relevant information does not specifically refer to certain fixed information. For example, when the information included in the positioning-assisted relevant information changes, the positioning-assisted relevant information may change accordingly.

In an embodiment of the present invention, the positioning-assisted relevant information includes type information of the second terminal device.

In an embodiment of the present invention, the type information of the second terminal device includes at least one of: roadside unit type information; positioning-assisted terminal type information; fixed positioning-assisted terminal type information; infrastructure positioning-assisted terminal type information; temporary positioning-assisted terminal type information; or master positioning-assisted terminal type information.

In an embodiment of the present invention, the positioning-assisted relevant information includes information related to position information of the second terminal device.

In an embodiment of the present invention, the information related to the position information of the second terminal device includes at least one of: having global positioning system (GPS) or global navigation satellite system (GNSS) capability information; position information; detailed position information; GPS position information; GNSS position information; precise position information; or reliable position information.

In an embodiment of the present invention, the positioning-assisted relevant information includes auxiliary positioning type information supported by the second terminal device.

In an embodiment of the present invention, the auxiliary positioning type information supported by the second terminal device includes at least one of: an observed time difference of arrival (OTDOA); an uplink time difference of arrival (UTDOA); an angle-of-arrival (AOA); an angle-of-departure (AOD); an uplink angle-of-arrival (UL-AOA); a downlink angle-of-departure (DL-AOD); multiple round trip times (RTTs); a single sided RTT; a double sided RTT; a downlink time difference of arrival (DL-TDOA); an uplink time difference of arrival (UL-TDOA); a carrier phase; an enhanced cell identifier (ID); assisted GNSS positioning; wireless local area network (WLAN) positioning; Bluetooth positioning; barometer positioning; sensor positioning; ranging; absolute positioning; or relative positioning.

For example, in an embodiment of the present invention, the positioning-assisted relevant information includes information related to a network state of the second terminal device.

For example, in an embodiment of the present invention, the information related to the network state of the second terminal device includes at least one of: a serving cell corresponding to the second terminal device; information of the serving cell supporting sidelink communication or supporting sidelink communication of a limited service; the serving cell being located on a frequency that supports sidelink communication; on a frequency used for sidelink communication, the second terminal device being out of coverage; network connection quality information; network connection type information; serving cell identifier; or a message of the second terminal device performing sidelink communication.

For example, in an embodiment of the present invention, the network connection type information includes at least one of: long term evolution (LTE) network connection; new radio (NR) network connection; fixed network connection; or satellite network connection.

For example, in an embodiment of the present invention, the serving cell identifier includes at least one of: physical cell identifier (PCI); or global cell identifier (GCI).

For example, in an embodiment of the present invention, receiving the positioning-assisted relevant information sent by the second terminal device includes at least one of: receiving the positioning-assisted relevant information sent by the second terminal device via a proximity service (ProSe) message; receiving the positioning-assisted relevant information sent by the second terminal device via a radio resource control (RRC) message; receiving the positioning-assisted relevant information sent by the second terminal device via a PC5-S message; or receiving the positioning-assisted relevant information sent by the second terminal device via a sidelink LTE positioning protocol (LPP) message.

In conclusion, in the embodiments of the present invention, the positioning-assisted relevant information sent by the second terminal device is received, and the second terminal device is determined to be the positioning-assisted terminal device or the candidate positioning-assisted terminal device according to the positioning-assisted relevant information. In the embodiments of the present invention, the positioning-assisted terminal device or the candidate positioning-assisted terminal device may be determined according to the positioning-assisted relevant information, thereby avoiding the situation that the positioning-assisted terminal device cannot be found, and thus the positioning-assisted terminal device may be determined. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

FIG. 3 is a flowchart of a method for determining a positioning-assisted terminal device provided by an embodiment of the present invention. The method is performed by a first terminal device and includes the following steps as shown in FIG. 3.

In step 301, positioning-assisted relevant information sent by a second terminal device is received. The positioning-assisted relevant information includes type information of the second terminal device.

In step 302, the second terminal device is determined to be a positioning-assisted terminal device or a candidate positioning-assisted terminal device according to the positioning-assisted relevant information.

In an embodiment of the present invention, the type information of the second terminal device includes at least one of: roadside unit type information; positioning-assisted terminal type information; fixed positioning-assisted terminal type information; infrastructure positioning-assisted terminal type information; temporary positioning-assisted terminal type information; or master positioning-assisted terminal type information.

In an embodiment of the present invention, the positioning-assisted relevant information does not specifically refer to certain fixed information. For example, when a piece number of information included in the type information of the second terminal device changes, the type information of the second terminal device may change accordingly. For example, when specific type information included in the type information of the second terminal device changes, the type information of the second terminal device may change accordingly.

For example, in an embodiment of the present invention, the roadside unit type information may include for example a roadside unit and a non-roadside unit. For example, the roadside may be a directional antenna device placed at both sides of a road, specifically used to provide the positioning service.

For example, in an embodiment of the present invention, the positioning-assisted terminal type information may include, for example, a positioning-assisted terminal device and a non-positioning-assisted terminal device. The fixed positioning-assisted terminal type information may include, for example, a fixed positioning-assisted terminal device and a mobile positioning-assisted terminal device.

For example, in an embodiment of the present invention, the infrastructure positioning-assisted terminal type information may include, for example, an infrastructure positioning-assisted terminal device and a non-infrastructure positioning-assisted terminal device.

For example, in an embodiment of the present invention, the temporary positioning-assisted terminal type information may include, for example, a temporary positioning-assisted terminal device and a non-temporary positioning-assisted terminal device. The temporary positioning-assisted terminal device may, for example, be an auxiliary terminal device that has a GPS capability and serves as an auxiliary terminal device for other terminal devices within a time period.

For example, in an embodiment of the present invention, the master positioning-assisted terminal type information may include, for example, a master positioning-assisted terminal device and a non-master positioning-assisted terminal device. The master positioning-assisted terminal (Master) is responsible for coordinating other positioning-assisted terminals (Slaves) to provide the positioning service.

In conclusion, in the embodiments of the present invention, the positioning-assisted relevant information sent by the second terminal device is received. The positioning-assisted relevant information includes the second terminal device type information. The second terminal device is determined to be the positioning-assisted terminal device or the candidate positioning-assisted terminal device according to the positioning-assisted relevant information. In the embodiments of the present invention, the positioning-assisted terminal device or the candidate positioning-assisted terminal device may be determined according to the positioning-assisted relevant information, thereby avoiding the situation that the positioning-assisted terminal device cannot be found, and thus the positioning-assisted terminal device may be determined. In the embodiment of the present invention, it is specifically disclosed that the positioning-assisted relevant information includes the second terminal device type information. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

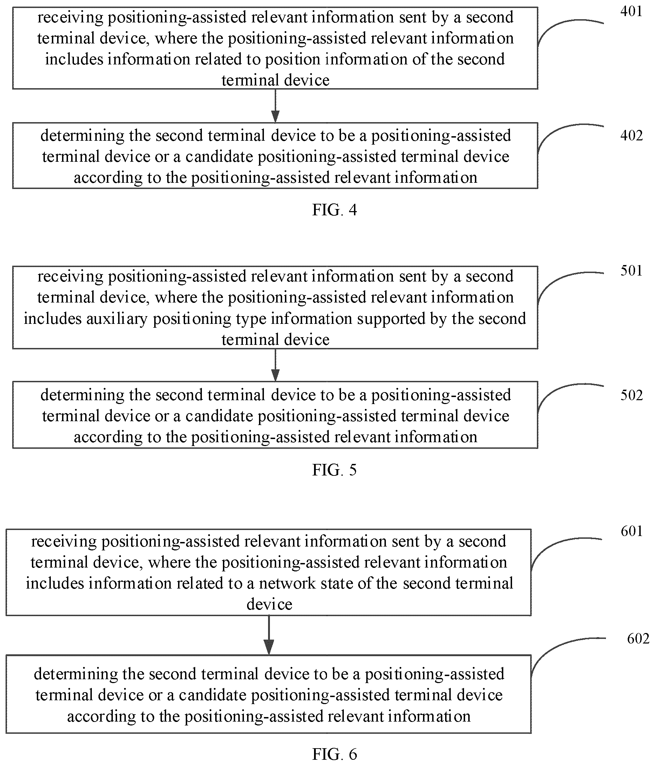

FIG. 4 is a flowchart of a method for determining a positioning-assisted terminal device provided by an embodiment of the present invention. The method is performed by a first terminal device and includes the following steps as shown in FIG. 4.

In step 401, positioning-assisted relevant information sent by a second terminal device is received. The positioning-assisted relevant information includes information related to position information of the second terminal device.

In step 402, the second terminal device is determined to be a positioning-assisted terminal device or a candidate positioning-assisted terminal device according to the positioning-assisted relevant information.

In an embodiment of the present invention, the information related to the position information of the second terminal device includes at least one of: having global positioning system (GPS) or global navigation satellite system (GNSS) capability information; position information; detailed position information; GPS position information; GNSS position information; precise position information; or reliable position information.

In an embodiment of the present invention, the information related to the position information of the second terminal device does not specifically refer to certain fixed information related to the position information of the second terminal device. For example, when a piece number of information included in the information related to the position information of the second terminal device changes, the information related to the position information of the second terminal device may change accordingly. When specific information included in the information related to the position information of the second terminal device changes, the information related to the position information of the second terminal device may change accordingly.

In an embodiment of the present invention, the GPS capability information refers to a capability of the terminal device to perform GPS positioning. The GNSS capability information refers to a capability of the terminal device to perform GNSS positioning. The position information refers to information about a position of the terminal device. The position information may be, for example, range information corresponding to the position of the terminal device. For example, the detailed position information may refer to position information where an amount of the position information of the terminal device is greater than a preset information amount. The position information may be, for example, Province A, City B, District C. The detailed position information may be, for example, Province A, City B, District C, Community D, Unit G, Building F.

For example, in an embodiment of the present invention, precise position information may refer to position information whose accuracy is greater than an accuracy threshold. The reliable position information may, for example, refer to position information whose reliability is greater than a reliability threshold.

In conclusion, in the embodiments of the present invention, the positioning-assisted relevant information sent by the second terminal device is received. The positioning-assisted relevant information includes the information related to the position information of the second terminal device. The second terminal device is determined to be the positioning-assisted terminal device or the candidate positioning-assisted terminal device according to the positioning-assisted relevant information. In the embodiments of the present invention, the positioning-assisted terminal device or the candidate positioning-assisted terminal device may be determined according to the positioning-assisted relevant information, thereby avoiding the situation that the positioning-assisted terminal device cannot be found, and thus the positioning-assisted terminal device may be determined. In the embodiment of the present invention, it is specifically disclosed that the positioning-assisted relevant information includes the information related to the position information of the second terminal device. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

FIG. 5 is a flowchart of a method for determining a positioning-assisted terminal device provided by an embodiment of the present invention. The method is performed by a first terminal device and includes the following steps as shown in FIG. 5.

In step 501, positioning-assisted relevant information sent by a second terminal device is received. The positioning-assisted relevant information includes auxiliary positioning type information supported by the second terminal device.

In step 502, the second terminal device is determined to be a positioning-assisted terminal device or a candidate positioning-assisted terminal device according to the positioning-assisted relevant information.

In an embodiment of the present invention, the auxiliary positioning type information supported by the second terminal device includes at least one of: an observed time difference of arrival (OTDOA); an uplink time difference of arrival (UTDOA); an angle-of-arrival (AOA); an angle-of-departure (AOD); an uplink angle-of-arrival (UL-AOA); a downlink angle-of-departure (DL-AOD); multiple round trip times (RTTs); a single sided RTT; a double sided RTT; a downlink time difference of arrival (DL-TDOA); an uplink time difference of arrival (UL-TDOA); a carrier phase; an enhanced cell identifier (ID); assisted GNSS positioning; wireless local area network (WLAN) positioning; Bluetooth positioning; barometer positioning; sensor positioning; ranging; absolute positioning; or relative positioning.

In an embodiment of the present invention, the auxiliary positioning type information supported by the second terminal device does not specifically refer to certain fixed auxiliary positioning type information. For example, when a piece number of information included in the auxiliary positioning type information supported by the second terminal device changes, the auxiliary positioning type information supported by the second terminal device may change accordingly. For example, when specific information included in the auxiliary positioning type information supported by the second terminal device changes, the auxiliary positioning type information supported by the second terminal device may change accordingly.

For example, in an embodiment of the present invention, the auxiliary positioning type information supported by the second terminal device may only include OTDOA, and the auxiliary positioning type information supported by the second terminal device may include AOA and AOD, for example.

In conclusion, in the embodiments of the present invention, the positioning-assisted relevant information sent by the second terminal device is received. The positioning-assisted relevant information includes the auxiliary positioning type information supported by the second terminal device. The second terminal device is determined to be the positioning-assisted terminal device or the candidate positioning-assisted terminal device according to the positioning-assisted relevant information. In the embodiments of the present invention, the positioning-assisted terminal device or the candidate positioning-assisted terminal device may be determined according to the positioning-assisted relevant information, thereby avoiding the situation that the positioning-assisted terminal device cannot be found, and thus the positioning-assisted terminal device may be determined. In the embodiment of the present invention, it is specifically disclosed that the positioning-assisted relevant information includes the auxiliary positioning type information supported by the second terminal device. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

FIG. 6 is a flowchart of a method for determining a positioning-assisted terminal device provided by an embodiment of the present invention. The method is performed by a first terminal device and includes the following steps as shown in FIG. 6.

In step 601, positioning-assisted relevant information sent by a second terminal device is received. The positioning-assisted relevant information includes information related to a network state of the second terminal device.

In step 602, the second terminal device is determined to be a positioning-assisted terminal device or a candidate positioning-assisted terminal device according to the positioning-assisted relevant information.

In an embodiment of the present invention, the information related to the network state of the second terminal device includes at least one of: a serving cell corresponding to the second terminal device; information of the serving cell supporting sidelink communication or supporting sidelink communication of a limited service; the serving cell being located on a frequency that supports sidelink communication; on a frequency used for sidelink communication, the second terminal device being out of coverage; network connection quality information; network connection type information; serving cell identifier; or a message of the second terminal device performing sidelink communication.

In an embodiment of the present invention, the network connection type information includes at least one of: long term evolution (LTE) network connection; new radio (NR) network connection; fixed network connection; or satellite network connection.

In an embodiment of the present invention, the serving cell identifier includes at least one of: physical cell identifier (PCI); or global cell identifier (GCI).

For example, in an embodiment of the present invention, the information related to the network state of the second terminal device does not specifically refer to certain relevant information. For example, when a piece number of information included in the information related to the network state of the second terminal device changes, the information related to the network state of the second terminal device may change accordingly. For example, when information included in the information related to the network state of the second terminal device changes, the information related to the network state of the second terminal device may change accordingly. For example, the information related to the network state of the second terminal device may include the serving cell corresponding to the second terminal device. The information related to the network state of the second terminal device may include the serving cell corresponding to the second terminal device and the network connection quality information.

In an embodiment of the present invention, the network connection quality information is used to indicate a quality of the network to which the terminal device is connected. The network connection quality information does not specifically refer to certain fixed quality information. The network connection quality information may include, for example, first network connection quality information and second network connection quality information. The first network connection quality information may be, for example, quality information greater than a quality threshold. The second network connection quality information may be, for example, less than a quality threshold.

In conclusion, in the embodiments of the present invention, the positioning-assisted relevant information sent by the second terminal device is received. The positioning-assisted relevant information includes the auxiliary positioning type information supported by the second terminal device. The second terminal device is determined to be the positioning-assisted terminal device or the candidate positioning-assisted terminal device according to the positioning-assisted relevant information. In the embodiments of the present invention, the positioning-assisted terminal device or the candidate positioning-assisted terminal device may be determined according to the positioning-assisted relevant information, thereby avoiding the situation that the positioning-assisted terminal device cannot be found, and thus the positioning-assisted terminal device may be determined. In the embodiment of the present invention, it is specifically disclosed that the positioning-assisted relevant information includes the information related to the network state of the second terminal device. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

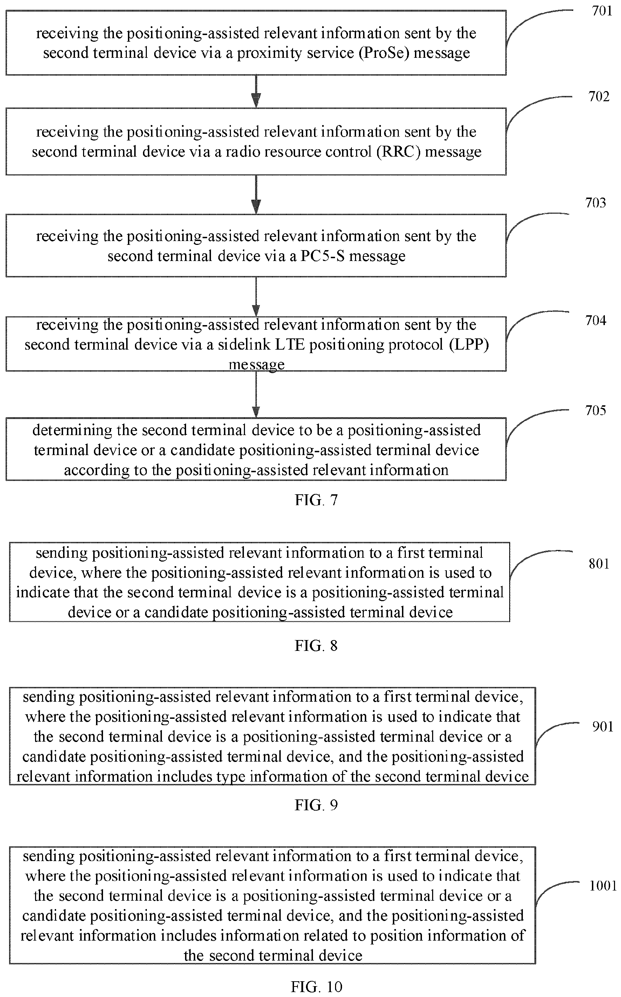

FIG. 7 is a flowchart of a method for determining a positioning-assisted terminal device provided by an embodiment of the present invention. The method is performed by a first terminal device and includes the following steps as shown in FIG. 7.

In step 701, the positioning-assisted relevant information sent by the second terminal device is received via a proximity service (ProSe) message.

In step 702, the positioning-assisted relevant information sent by the second terminal device is received via a radio resource control (RRC) message.

In step 703, the positioning-assisted relevant information sent by the second terminal device is received via a PC5-S message.

In step 704, the positioning-assisted relevant information sent by the second terminal device is received via a sidelink LTE positioning protocol (LPP) message.

In step 705, the second terminal device is determined to be a positioning-assisted terminal device or a candidate positioning-assisted terminal device according to the positioning-assisted relevant information.

One of steps 701 to 704 is selected to be performed, that is, the first terminal device can receive the positioning-assisted relevant information sent by the second terminal device via one of the messages.

For example, in an embodiment of the present invention, the first terminal device may receive the positioning-assisted relevant information sent by the second terminal device via the proximity service (ProSe) message, and determine the second terminal device to be the positioning-assisted terminal device or the candidate positioning-assisted terminal device according to the positioning-assisted relevant information. The ProSe message may be, for example, a PC5_DISCOVERY message.

For example, in an embodiment of the present invention, the first terminal device may receive the positioning-assisted relevant information sent by the second terminal device via the RRC message, and determine the second terminal device to be the positioning-assisted terminal device or the candidate positioning-assisted terminal device according to the positioning-assisted relevant information. The RRC message may be, for example, a system message sent on the sidelink.

For example, in an embodiment of the present invention, the first terminal device may receive the positioning-assisted relevant information sent by the second terminal device via the PC5-S message, and determine the second terminal device to be the positioning-assisted terminal device or the candidate positioning-assisted terminal device according to the positioning-assisted relevant information.

For example, in an embodiment of the present invention, the first terminal device may receive the positioning-assisted relevant information sent by the second terminal device via the sidelink LPP message, and determine the second terminal device to be the positioning-assisted terminal device or the candidate positioning-assisted terminal device according to the positioning-assisted relevant information. The sidelink LPP message is a positioning protocol transmitted between a terminal device and another terminal device through the sidelink.

In conclusion, in the embodiments of the present invention, the positioning-assisted relevant information sent by the second terminal device is received. The second terminal device is determined to be the positioning-assisted terminal device or the candidate positioning-assisted terminal device according to the positioning-assisted relevant information. In the embodiments of the present invention, the positioning-assisted terminal device or the candidate positioning-assisted terminal device may be determined according to the positioning-assisted relevant information, thereby avoiding the situation that the positioning-assisted terminal device cannot be found, and thus the positioning-assisted terminal device may be determined. In the embodiment of the present invention, it is specifically disclosed the transmission manner for the positioning-assisted relevant information, which may improve convenience on transmitting the positioning-assisted relevant information. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

FIG. 8 is a flowchart of a method for determining a positioning-assisted terminal device provided by an embodiment of the present invention. The method is performed by a second terminal device and includes the following step as shown in FIG. 8.

In step 801, positioning-assisted relevant information is sent to a first terminal device. The positioning-assisted relevant information is used to indicate that the second terminal device is a positioning-assisted terminal device or a candidate positioning-assisted terminal device.

In an embodiment of the present invention, the positioning-assisted relevant information includes type information of the second terminal device.

In an embodiment of the present invention, the type information of the second terminal device includes at least one of: roadside unit type information; positioning-assisted terminal type information; fixed positioning-assisted terminal type information; infrastructure positioning-assisted terminal type information; temporary positioning-assisted terminal type information; or master positioning-assisted terminal type information.

In an embodiment of the present invention, the positioning-assisted relevant information includes information related to position information of the second terminal device.

For example, in an embodiment of the present invention, the information related to the position information of the second terminal device includes at least one of: having global positioning system (GPS) or global navigation satellite system (GNSS) capability information; position information; detailed position information; GPS position information; GNSS position information; precise position information; or reliable position information.

In an embodiment of the present invention, the positioning-assisted relevant information includes auxiliary positioning type information supported by the second terminal device.

For example, in an embodiment of the present invention, the auxiliary positioning type information supported by the second terminal device includes at least one of: an observed time difference of arrival (OTDOA); an uplink time difference of arrival (UTDOA); an angle-of-arrival (AOA); an angle-of-departure (AOD); an uplink angle-of-arrival (UL-AOA); a downlink angle-of-departure (DL-AOD); multiple round trip times (RTTs); a single sided RTT; a double sided RTT; a downlink time difference of arrival (DL-TDOA); an uplink time difference of arrival (UL-TDOA); a carrier phase; an enhanced cell identifier (ID); assisted GNSS positioning; wireless local area network (WLAN) positioning; Bluetooth positioning; barometer positioning; sensor positioning; ranging; absolute positioning; or relative positioning.

In an embodiment of the present invention, the positioning-assisted relevant information includes information related to a network state of the second terminal device.

For example, in an embodiment of the present invention, the information related to the network state of the second terminal device includes at least one of: a serving cell corresponding to the second terminal device; information of the serving cell supporting sidelink communication or supporting sidelink communication of a limited service; the serving cell being located on a frequency that supports sidelink communication; on a frequency used for sidelink communication, the second terminal device being out of coverage; network connection quality information; network connection type information; serving cell identifier; or a message of the second terminal device performing sidelink communication.

For example, in an embodiment of the present invention, the network connection type information includes at least one of: long term evolution (LTE) network connection; new radio (NR) network connection; fixed network connection; or satellite network connection.

For example, in an embodiment of the present invention, the serving cell identifier includes at least one of: physical cell identifier (PCI); or global cell identifier (GCI).

For example, in an embodiment of the present invention, sending the positioning-assisted relevant information to the first terminal device includes at least one of: sending the positioning-assisted relevant information to the first terminal device via a proximity service (ProSe) message; sending the positioning-assisted relevant information to the first terminal device via a radio resource control (RRC) message; sending the positioning-assisted relevant information to the first terminal device via a PC5-S message; or sending the positioning-assisted relevant information to the first terminal device via a sidelink LTE positioning protocol (LPP) message.

In conclusion, in the embodiments of the present invention, the positioning-assisted relevant information is sent to the first terminal device, the positioning-assisted relevant information is used to indicate that the second terminal device is the positioning-assisted terminal device or the candidate positioning-assisted terminal device. In the embodiments of the present invention, the positioning-assisted relevant information may be sent to the first terminal device to allow the first terminal device to determine the positioning-assisted terminal device or the candidate positioning-assisted terminal device according to the positioning-assisted relevant information, thereby avoiding the situation that the positioning-assisted terminal device cannot be found, and thus the positioning-assisted terminal device may be determined. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

FIG. 9 is a flowchart of a method for determining a positioning-assisted terminal device provided by an embodiment of the present invention. The method is performed by a second terminal device and includes the following step as shown in FIG. 9.

In step 901, positioning-assisted relevant information is sent to a first terminal device. The positioning-assisted relevant information is used to indicate that the second terminal device is a positioning-assisted terminal device or a candidate positioning-assisted terminal device. The positioning-assisted relevant information includes type information of the second terminal device.

For example, in an embodiment of the present invention, the type information of the second terminal device includes at least one of: roadside unit type information; positioning-assisted terminal type information; fixed positioning-assisted terminal type information; infrastructure positioning-assisted terminal type information; temporary positioning-assisted terminal type information; or master positioning-assisted terminal type information.

In conclusion, in the embodiments of the present invention, the positioning-assisted relevant information is sent to the first terminal device, the positioning-assisted relevant information is used to indicate that the second terminal device is the positioning-assisted terminal device or the candidate positioning-assisted terminal device. In the embodiments of the present invention, the positioning-assisted relevant information may be sent to the first terminal device to allow the first terminal device to determine the positioning-assisted terminal device or the candidate positioning-assisted terminal device according to the positioning-assisted relevant information, thereby avoiding the situation that the positioning-assisted terminal device cannot be found, and thus the positioning-assisted terminal device may be determined. In the embodiment of the present invention, it is specifically disclosed that the positioning-assisted relevant information includes the second terminal device type information. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

FIG. 10 is a flowchart of a method for determining a positioning-assisted terminal device provided by an embodiment of the present invention. The method is performed by a terminal device and includes the following step as shown in FIG. 10.

In step 1001, positioning-assisted relevant information is sent to a first terminal device. The positioning-assisted relevant information is used to indicate that the second terminal device is a positioning-assisted terminal device or a candidate positioning-assisted terminal device. The positioning-assisted relevant information includes information related to position information of the second terminal device.

In an embodiment of the present invention, the information related to the position information of the second terminal device includes at least one of: having global positioning system (GPS) or global navigation satellite system (GNSS) capability information; position information; detailed position information; GPS position information; GNSS position information; precise position information; or reliable position information.

In conclusion, in the embodiments of the present invention, the positioning-assisted relevant information is sent to the first terminal device, the positioning-assisted relevant information is used to indicate that the second terminal device is the positioning-assisted terminal device or the candidate positioning-assisted terminal device. In the embodiments of the present invention, the positioning-assisted relevant information may be sent to the first terminal device to allow the first terminal device to determine the positioning-assisted terminal device or the candidate positioning-assisted terminal device according to the positioning-assisted relevant information, thereby avoiding the situation that the positioning-assisted terminal device cannot be found, and thus the positioning-assisted terminal device may be determined. In the embodiment of the present invention, it is specifically disclosed that the positioning-assisted relevant information includes the information related to the position information of the second terminal device. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

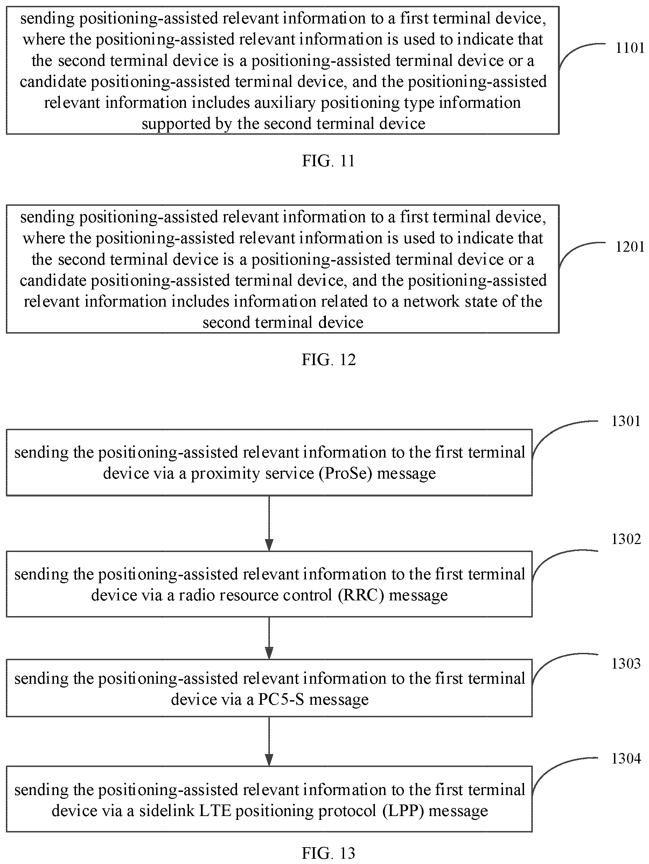

FIG. 11 is a flowchart of a method for determining a positioning-assisted terminal device provided by an embodiment of the present invention. The method is performed by a second terminal device and includes the following step as shown in FIG. 11.

In step 1101, positioning-assisted relevant information is sent to a first terminal device. The positioning-assisted relevant information is used to indicate that the second terminal device is a positioning-assisted terminal device or a candidate positioning-assisted terminal device. The positioning-assisted relevant information includes auxiliary positioning type information supported by the second terminal device.

In an embodiment of the present invention, the auxiliary positioning type information supported by the second terminal device includes at least one of: an observed time difference of arrival (OTDOA); an uplink time difference of arrival (UTDOA); an angle-of-arrival (AOA); an angle-of-departure (AOD); an uplink angle-of-arrival (UL-AOA); a downlink angle-of-departure (DL-AOD); multiple round trip times (RTTs); a single sided RTT; a double sided RTT; a downlink time difference of arrival (DL-TDOA); an uplink time difference of arrival (UL-TDOA); a carrier phase; an enhanced cell identifier (ID); assisted GNSS positioning; wireless local area network (WLAN) positioning; Bluetooth positioning; barometer positioning; sensor positioning; ranging; absolute positioning; or relative positioning.

In conclusion, in the embodiments of the present invention, the positioning-assisted relevant information is sent to the first terminal device, the positioning-assisted relevant information is used to indicate that the second terminal device is the positioning-assisted terminal device or the candidate positioning-assisted terminal device. In the embodiments of the present invention, the positioning-assisted relevant information may be sent to the first terminal device to allow the first terminal device to determine the positioning-assisted terminal device or the candidate positioning-assisted terminal device according to the positioning-assisted relevant information, thereby avoiding the situation that the positioning-assisted terminal device cannot be found, and thus the positioning-assisted terminal device may be determined. In the embodiment of the present invention, it is specifically disclosed that the positioning-assisted relevant information includes the auxiliary positioning type information supported by the second terminal device. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

FIG. 12 is a flowchart of a method for determining a positioning-assisted terminal device provided by an embodiment of the present invention. The method is performed by a second terminal device and includes the following step as shown in FIG. 12.

In step 1201, positioning-assisted relevant information is sent to a first terminal device. The positioning-assisted relevant information is used to indicate that the second terminal device is a positioning-assisted terminal device or a candidate positioning-assisted terminal device. The positioning-assisted relevant information includes information related to a network state of the second terminal device.

In an embodiment of the present invention, the information related to the network state of the second terminal device includes at least one of: a serving cell corresponding to the second terminal device; information of the serving cell supporting sidelink communication or supporting sidelink communication of a limited service; the serving cell being located on a frequency that supports sidelink communication; on a frequency used for sidelink communication, the second terminal device being out of coverage; network connection quality information; network connection type information; serving cell identifier; or a message of the second terminal device performing sidelink communication.

In an embodiment of the present invention, the network connection type information includes at least one of: long term evolution (LTE) network connection; new radio (NR) network connection; fixed network connection; or satellite network connection.

In an embodiment of the present invention, the serving cell identifier includes at least one of: physical cell identifier (PCI); or global cell identifier (GCI).

In conclusion, in the embodiments of the present invention, the positioning-assisted relevant information is sent to the first terminal device, the positioning-assisted relevant information is used to indicate that the second terminal device is the positioning-assisted terminal device or the candidate positioning-assisted terminal device. In the embodiments of the present invention, the positioning-assisted relevant information may be sent to the first terminal device to allow the first terminal device to determine the positioning-assisted terminal device or the candidate positioning-assisted terminal device according to the positioning-assisted relevant information, thereby avoiding the situation that the positioning-assisted terminal device cannot be found, and thus the positioning-assisted terminal device may be determined. In the embodiment of the present invention, it is specifically disclosed that the positioning-assisted relevant information includes the information related to the network state of the second terminal device. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

FIG. 13 is a flowchart of a method for determining a positioning-assisted terminal device provided by an embodiment of the present invention. The method is performed by a second terminal device and includes the following steps as shown in FIG. 13.

In step 1301, the positioning-assisted relevant information is sent to the first terminal device via a proximity service (ProSe) message.

In step 1302, the positioning-assisted relevant information is sent to the first terminal device via a radio resource control (RRC) message.

In step 1303, the positioning-assisted relevant information is sent to the first terminal device via a PC5-S message.

In step 1304, the positioning-assisted relevant information is sent to the first terminal device via a sidelink LTE positioning protocol (LPP) message.

In conclusion, in the embodiments of the present invention, the positioning-assisted relevant information is sent to the first terminal device, the positioning-assisted relevant information is used to indicate that the second terminal device is the positioning-assisted terminal device or the candidate positioning-assisted terminal device. In the embodiments of the present invention, the positioning-assisted relevant information may be sent to the first terminal device to allow the first terminal device to determine the positioning-assisted terminal device or the candidate positioning-assisted terminal device according to the positioning-assisted relevant information, thereby avoiding the situation that the positioning-assisted terminal device cannot be found, and thus the positioning-assisted terminal device may be determined. In the embodiment of the present invention, it is specifically disclosed the transmission manner for the positioning-assisted relevant information, which may improve convenience on transmitting the positioning-assisted relevant information. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

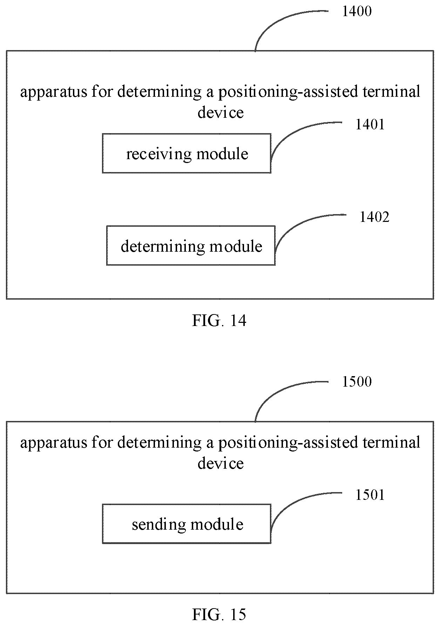

FIG. 14 is a schematic diagram of an apparatus for determining a positioning-assisted terminal device provided by an embodiment of the present invention. As shown in FIG. 14, the apparatus 1400 may be provided on a first terminal device. The apparatus 1400 includes: a receiving module 1401 configured to receive positioning-assisted relevant information sent by a second terminal device; and a determining module 1402 configured to determine the second terminal device to be a positioning-assisted terminal device or a candidate positioning-assisted terminal device according to the positioning-assisted relevant information.

In conclusion, in the apparatus for determining the positioning-assisted terminal device of the embodiments of the present invention, the receiving module receives the positioning-assisted relevant information sent by the second terminal device, and the determining module determines the second terminal device to be the positioning-assisted terminal device or the candidate positioning-assisted terminal device according to the positioning-assisted relevant information. In the embodiments of the present invention, the positioning-assisted terminal device or the candidate positioning-assisted terminal device may be determined according to the positioning-assisted relevant information, thereby avoiding the situation that the positioning-assisted terminal device cannot be found, and thus the positioning-assisted terminal device may be determined. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

Optionally, in an embodiment of the present invention, the positioning-assisted relevant information includes type information of the second terminal device.

Optionally, in an embodiment of the present invention, the type information of the second terminal device includes at least one of: roadside unit type information; positioning-assisted terminal type information; fixed positioning-assisted terminal type information; infrastructure positioning-assisted terminal type information; temporary positioning-assisted terminal type information; or master positioning-assisted terminal type information.

Optionally, in an embodiment of the present invention, the positioning-assisted relevant information includes information related to position information of the second terminal device.

Optionally, in an embodiment of the present invention, the information related to the position information of the second terminal device includes at least one of: having global positioning system (GPS) or global navigation satellite system (GNSS) capability information; position information; detailed position information; GPS position information; GNSS position information; precise position information; or reliable position information.

Optionally, in an embodiment of the present invention, the positioning-assisted relevant information includes auxiliary positioning type information supported by the second terminal device.

Optionally, in an embodiment of the present invention, the auxiliary positioning type information supported by the second terminal device includes at least one of: an observed time difference of arrival (OTDOA); an uplink time difference of arrival (UTDOA); an angle-of-arrival (AOA); an angle-of-departure (AOD); an uplink angle-of-arrival (UL-AOA); a downlink angle-of-departure (DL-AOD); multiple round trip times (RTTs); a single sided RTT; a double sided RTT; a downlink time difference of arrival (DL-TDOA); an uplink time difference of arrival (UL-TDOA); a carrier phase; an enhanced cell identifier (ID); assisted GNSS positioning; wireless local area network (WLAN) positioning; Bluetooth positioning; barometer positioning; sensor positioning; ranging; absolute positioning; or relative positioning.

Optionally, in an embodiment of the present invention, the positioning-assisted relevant information includes information related to a network state of the second terminal device.

Optionally, in an embodiment of the present invention, the information related to the network state of the second terminal device includes at least one of: a serving cell corresponding to the second terminal device; information of the serving cell supporting sidelink communication or supporting sidelink communication of a limited service; the serving cell being located on a frequency that supports sidelink communication; on a frequency used for sidelink communication, the second terminal device being out of coverage; network connection quality information; network connection type information; serving cell identifier; or a message of the second terminal device performing sidelink communication.

Optionally, in an embodiment of the present invention, the network connection type information includes at least one of: long term evolution (LTE) network connection; new radio (NR) network connection; fixed network connection; or satellite network connection.

Optionally, in an embodiment of the present invention, the serving cell identifier includes at least one of: physical cell identifier (PCI); or global cell identifier (GCI).

Optionally, in an embodiment of the present invention, when the receiving module 1401 is configured to receive the positioning-assisted relevant information sent by the second terminal device, it is specifically configured to perform at least one of: receiving the positioning-assisted relevant information sent by the second terminal device via a proximity service (ProSe) message; receiving the positioning-assisted relevant information sent by the second terminal device via a radio resource control (RRC) message; receiving the positioning-assisted relevant information sent by the second terminal device via a PC5-S message; or receiving the positioning-assisted relevant information sent by the second terminal device via a sidelink LTE positioning protocol (LPP) message.

FIG. 15 is a schematic diagram of an apparatus for determining a positioning-assisted terminal device provided by another embodiment of the present invention. As shown in FIG. 15, the apparatus 1500 may be provided on a second terminal device. The apparatus 1500 includes: a sending module 1501 configured to send positioning-assisted relevant information to a first terminal device, where the positioning-assisted relevant information is used to indicate that the second terminal device is a positioning-assisted terminal device or a candidate positioning-assisted terminal device.

In conclusion, in the apparatus for determining the positioning-assisted terminal device of the embodiments of the present invention, the sending module sends the positioning-assisted relevant information to the first terminal device, where the positioning-assisted relevant information is used to indicate that the second terminal device is the positioning-assisted terminal device or the candidate positioning-assisted terminal device. In the embodiments of the present invention, the positioning-assisted relevant information may be sent to the first terminal device to allow the first terminal device to determine the positioning-assisted terminal device or the candidate positioning-assisted terminal device according to the positioning-assisted relevant information, thereby avoiding the situation that the positioning-assisted terminal device cannot be found, and thus the positioning-assisted terminal device may be determined. The present invention provides a processing method for the situation of "determining the positioning-assisted terminal device" to provide a discovery mechanism for the positioning-assisted terminal device. Determining the positioning-assisted terminal device according to the positioning-assisted relevant information can improve the accuracy of determining the positioning-assisted terminal device.

Optionally, in an embodiment of the present invention, the positioning-assisted relevant information includes type information of the second terminal device.

Optionally, in an embodiment of the present invention, the type information of the second terminal device includes at least one of: roadside unit type information; positioning-assisted terminal type information; fixed positioning-assisted terminal type information; infrastructure positioning-assisted terminal type information; temporary positioning-assisted terminal type information; or master positioning-assisted terminal type information.

Optionally, in an embodiment of the present invention, the positioning-assisted relevant information includes information related to position information of the second terminal device.

Optionally, in an embodiment of the present invention, the information related to the position information of the second terminal device includes at least one of: having global positioning system (GPS) or global navigation satellite system (GNSS) capability information; position information; detailed position information; GPS position information; GNSS position information; precise position information; or reliable position information.

Optionally, in an embodiment of the present invention, the positioning-assisted relevant information includes auxiliary positioning type information supported by the second terminal device.

Optionally, in an embodiment of the present invention, the auxiliary positioning type information supported by the second terminal device includes at least one of: an observed time difference of arrival (OTDOA); an uplink time difference of arrival (UTDOA); an angle-of-arrival (AOA); an angle-of-departure (AOD); an uplink angle-of-arrival (UL-AOA); a downlink angle-of-departure (DL-AOD); multiple round trip times (RTTs); a single sided RTT; a double sided RTT; a downlink time difference of arrival (DL-TDOA); an uplink time difference of arrival (UL-TDOA); a carrier phase; an enhanced cell identifier (ID); assisted GNSS positioning; wireless local area network (WLAN) positioning; Bluetooth positioning; barometer positioning; sensor positioning; ranging; absolute positioning; or relative positioning.

Optionally, in an embodiment of the present invention, the positioning-assisted relevant information includes information related to a network state of the second terminal device.

Optionally, in an embodiment of the present invention, the information related to the network state of the second terminal device includes at least one of: a serving cell corresponding to the second terminal device; information of the serving cell supporting sidelink communication or supporting sidelink communication of a limited service; the serving cell being located on a frequency that supports sidelink communication; on a frequency used for sidelink communication, the second terminal device being out of coverage; network connection quality information; network connection type information; serving cell identifier; or a message of the second terminal device performing sidelink communication.

Optionally, in an embodiment of the present invention, the network connection type information includes at least one of: long term evolution (LTE) network connection; new radio (NR) network connection; fixed network connection; or satellite network connection.

Optionally, in an embodiment of the present invention, the serving cell identifier includes at least one of: physical cell identifier (PCI); or global cell identifier (GCI).

Optionally, in an embodiment of the present invention, when the sending module 1501 is configured to send the positioning-assisted relevant information to the first terminal device, it is specifically configured to perform at least one of: sending the positioning-assisted relevant information to the first terminal device via a proximity service (ProSe) message; sending the positioning-assisted relevant information to the first terminal device via a radio resource control (RRC) message; sending the positioning-assisted relevant information to the first terminal device via a PC5-S message; or sending the positioning-assisted relevant information to the first terminal device via a sidelink LTE positioning protocol (LPP) message.

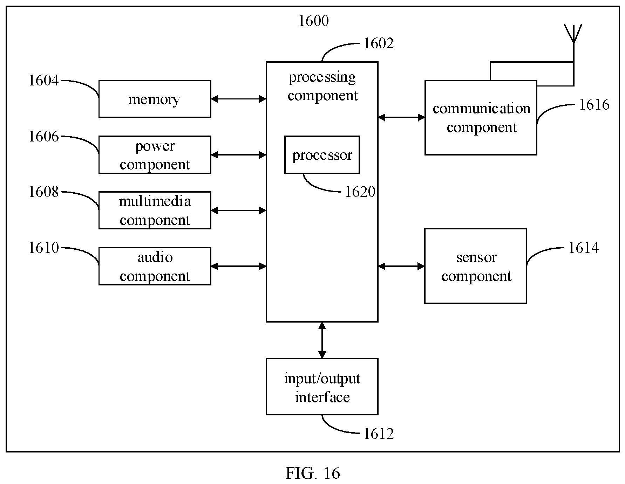

FIG. 16 is a block diagram of a terminal device, i.e., UE 1600 provided by an embodiment of the present invention. For example, the UE 1600 may be a mobile phone, a computer, a digital broadcast terminal device, a messaging device, a game console, a tablet device, a medical device, a fitness device, a personal digital assistant, or the like.

Referring to FIG. 16, the UE 1600 may include at least one of the following components: a processing component 1602, a memory 1604, a power component 1606, a multimedia component 1608, an audio component 1610, an input/output (I/O) interface 1612, a sensor component 1614, and a communication component 1616.

The processing component 1602 typically controls overall operations of the UE 1600, such as the operations associated with display, phone calls, data communications, camera operations, and recording operations. The processing component 1602 may include at least one processors 1320 to execute instructions to perform all or some of the steps in the above-described methods. Moreover, the processing component 1602 may include at least one module which facilitates the interaction between the processing component 1602 and other components. For instance, the processing component 1602 may include a multimedia module to facilitate the interaction between the multimedia component 1608 and the processing component 1602.

The memory 1604 is configured to store various types of data to support the operation of the UE 1600. Examples of such data include instructions for any applications or methods operated on the UE 1600, contact data, phonebook data, messages, pictures, videos, etc. The memory 1604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1606 provides power to various components of the UE 1600. The power component 1606 may include a power management system, at least one power sources, and any other components associated with the generation, management, and distribution of power in the UE 1600.

The multimedia component 1608 includes a screen providing an output interface between the UE 1600 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensors to sense touches, swipes, and gestures on the touch panel. The touch sensors may not only sense a boundary of a touch or swipe action, but also sense a wake-up time and a pressure associated with the touch or swipe action. In some embodiments, the multimedia component 1608 includes a front camera and/or a rear camera. The front camera and/or the rear camera may receive external multimedia data while the UE 1600 is in an operation mode, such as a photographing mode or a video mode. Each of the front camera and the rear camera may be a fixed optical lens system or have focus and optical zoom capability.

The audio component 1610 is configured to output and/or input audio signals. For example, the audio component 1610 includes a microphone (MIC) configured to receive an external audio signal when the UE 1600 is in an operation mode, such as a call mode, a recording mode, and a voice recognition mode. The received audio signal may be further stored in the memory 1604 or transmitted via the communication component 1616. In some embodiments, the audio component 1610 further includes a speaker to output audio signals.

The I/O interface 1612 provides an interface between the processing component 1602 and peripheral interface modules, such as keyboards, click wheels, buttons, and the like. The buttons may include, but are not limited to, a home button, a volume button, a starting button, and a locking button.

The sensor component 1614 includes at least one sensor to provide status assessments of various aspects of the UE 1600. For instance, the sensor component 1614 may detect an open/closed status of the equipment 1600, relative positioning of components, e.g., the display and the keypad, of the UE 1600. The sensor component 1614 may also detect a change in position of the UE 1600 or a component of the UE 1600, a presence or absence of user contact with the UE 1600, an orientation or an acceleration/deceleration of the UE 1600, and a change in temperature of the UE 1600. The sensor component 1614 may include a proximity sensor configured to detect the presence of nearby objects without any physical contact. The sensor component 1614 may further include a light sensor, such as a CMOS or CCD image sensor, for use in imaging applications. In some embodiments, the sensor component 1614 may further include an accelerometer sensor, a gyroscope sensor, a magnetic sensor, a pressure sensor, or a temperature sensor.

The communication component 1616 is configured to facilitate wired or wireless communication between the UE 1600 and other devices. The UE 1600 can access a wireless network based on a communication standard, such as Wi-Fi, 2G, or 3G, or a combination thereof. In an illustrative embodiment, the communication component 1616 receives a broadcast signal or broadcast associated information from an external broadcast management system via a broadcast channel. In an illustrative embodiment, the communication component 1616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1600 may be implemented with at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

In the above embodiments provided by the present invention, the methods provided in the embodiments of the present invention are introduced from perspectives of the network device and the UE respectively. In order to implement the various functions in the methods provided by the above embodiments of the present invention, the network device and the UE may include a hardware structure and a software module, and implement the above functions in a form of the hardware structure, the software module, or the hardware structure plus the software module. One function among the above mentioned functions may be implemented in the form of the hardware structure, the software module, or the hardware structure plus the software module.

In the above embodiments provided by the present invention, the methods provided in embodiments of the present invention are introduced from perspectives of the network device and the UE respectively. In order to implement the various functions in the methods provided by the above embodiments of the present invention, the network device and the UE may include a hardware structure and a software module, and implement the above functions in a form of the hardware structure, the software module, or the hardware structure plus the software module. One function among the above mentioned functions may be implemented in the form of the hardware structure, the software module, or the hardware structure plus the software module.

Embodiments of the present invention provide a communication device, which may include a transceiving module and a processing module. The transceiving module may include a sending module and/or a receiving module, the sending module is configured to implement a sending function, and the receiving module is configured to implement a receiving function. The transceiving module may implement the sending function and/or the receiving function.

The communication device may be a terminal device (such as the terminal device in the foregoing method embodiments), may also be a device in the terminal device, and may also be a device used in conjunction with the terminal device. Alternatively, the communication device may be a network device, may also be a device in the network device, and may also be a device used in conjunction with the network device.

Embodiments of the present invention provide a communication device, which may be a network device, or may be a terminal device (such as the terminal device in the foregoing method embodiments), or may be a chip, a chip system, or a processor that supports the network device to implement the above methods, or may be a chip, a chip system, or a processor that supports the terminal device to implement the above methods. The device may be configured to implement the methods as described in the above method embodiments, and for details, reference may be made to the descriptions in the above method embodiments.

The communications device may include one or more processors. The processor may be a general-purpose processor or a special-purpose processor. For example, it may be a baseband processor or a central processing unit. The baseband processor may be configured to process a communication protocol and communication data, and the central processing unit may be configured to control a communication device (such as a network device, a baseband chip, a terminal device, a terminal device chip, a DU or a CU, etc.), execute computer programs, and process data of the computer programs.

Optionally, the communication device may further include one or more memories having stored therein a computer program. The processor executes the computer program, to cause the communication device to implement the methods as described in the above method embodiments. Optionally, the memory may have stored therein data. The communication device and the memory may be provided separately or integrated together.

Optionally, the communication device may further include a transceiver and an antenna. The transceiver may be called a transceiving element, a transceiving machine, a transceiving circuit or the like, for implementing a transceiving function. The transceiver may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device may further include one or more interface circuits. The interface circuit is configured to receive code instructions and transmit the code instructions to the processor. The processor runs the code instructions to enable the communication device to execute the methods as described in the above method embodiments.

The communication device is a terminal device (such as the terminal device in the foregoing method embodiments). The processor is configured to execute the method shown in any one of FIGS. 2 to 13.

In an implementation, the processor may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation, the processor may have stored therein a computer program that, when run on the processor, causes the communication device to implement the methods as described in the above method embodiments. The computer program may be embedded in the processor, and in this case, the processor may be implemented by a hardware.

In an implementation, the communication device may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an N-type metal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device (such as the terminal device in the foregoing method embodiments), but the scope of the communication device described in the present invention is not limited thereto, and the structure of the communication device may not be limited thereto. The communication device may be a stand-alone device or may be a part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

For the case where the communication device may be a chip or a chip system, the chip includes a processor and an interface. In the chip, one or more processors may be provided, and more than one interface may be provided.

Optionally, the chip further includes a memory for storing necessary computer programs and data.

Those skilled in the art may also understand that various illustrative logical blocks and steps listed in embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present invention.

The present invention further provides a readable storage medium having stored thereon instructions that, when executed by a computer, cause functions of any of the above method embodiments to be implemented.

The present invention further provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or via microwave, etc.). The computer-readable storage medium may be any available medium that may be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are distinguished for convenience of description, and are not intended to limit the scope of embodiments of the present invention, and nor are they intended to represent sequential order.

The term "at least one" used in the present invention may also be described as one or more, and the term "a plurality of" may cover two, three, four or more, which are not limited in the present invention. In embodiments of the present invention, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative, with a true scope and spirit of the present invention being indicated by the following claims.

It will be appreciated that the present invention is not limited to the exact construction that has been described above and illustrated in the accompanying drawings, and that various modifications and changes may be made without departing from the scope thereof. It is intended that the scope of the present invention be limited by the appended claims.

## Claims

1. A method for determining a positioning-assisted terminal device, performed by a first terminal device, comprising:
receiving positioning-assisted relevant information sent by a second terminal device; and
determining the second terminal device to be a positioning-assisted terminal device or a candidate positioning-assisted terminal device according to the positioning-assisted relevant information.

2. The method according to claim 1, wherein the positioning-assisted relevant information comprises type information of the second terminal device.

3. The method according to claim 2, wherein the type information of the second terminal device comprises at least one of:
roadside unit type information;
positioning-assisted terminal type information;
fixed positioning-assisted terminal type information;
infrastructure positioning-assisted terminal type information;
temporary positioning-assisted terminal type information; or
master positioning-assisted terminal type information.

4. The method according to claim 1, wherein the positioning-assisted relevant information comprises information related to position information of the second terminal device.

5. The method according to claim 4, wherein the information related to the position information of the second terminal device comprises at least one of:
having global positioning system (GPS) or global navigation satellite system (GNSS) capability information;
position information;
detailed position information;
GPS position information;
GNSS position information;
precise position information; or
reliable position information.

6. The method according to claim 1, wherein the positioning-assisted relevant information comprises auxiliary positioning type information supported by the second terminal device.

7. The method according to claim 6, wherein the auxiliary positioning type information supported by the second terminal device comprises at least one of:
an observed time difference of arrival (OTDOA);
an uplink time difference of arrival (UTDOA);
an angle-of-arrival (AOA);
an angle-of-departure (AOD);
an uplink angle-of-arrival (UL-AOA);
a downlink angle-of-departure (DL-AOD);
multiple round trip times (RTTs);
a single sided RTT;
a double sided RTT;
a downlink time difference of arrival (DL-TDOA);
an uplink time difference of arrival (UL-TDOA);
a carrier phase;
an enhanced cell identifier (ID);
assisted GNSS positioning;
wireless local area network (WLAN) positioning;
Bluetooth positioning;
barometer positioning;
sensor positioning;
ranging;
absolute positioning; or
relative positioning.

8. The method according to claim 1, wherein the positioning-assisted relevant information comprises information related to a network state of the second terminal device.

9. The method according to claim 8, wherein the information related to the network state of the second terminal device comprises at least one of:
a serving cell corresponding to the second terminal device;
information of the serving cell supporting sidelink communication or supporting sidelink communication of a limited service;
the serving cell being located on a frequency that supports sidelink communication;
on a frequency used for sidelink communication, the second terminal device being out of coverage;
network connection quality information;
network connection type information;
serving cell identifier; or
a message of the second terminal device performing sidelink communication.

10. The method according to claim 8, wherein the network connection type information comprises at least one of:
long term evolution (LTE) network connection;
new radio (NR) network connection;
fixed network connection; or
satellite network connection.

11. The method according to claim 8, wherein the serving cell identifier comprises at least one of:
physical cell identifier (PCI); or
global cell identifier (GCI).

12. The method according to claim 1, wherein receiving the positioning-assisted relevant information sent by the second terminal device comprises at least one of:
receiving the positioning-assisted relevant information sent by the second terminal device via a proximity service (ProSe) message;
receiving the positioning-assisted relevant information sent by the second terminal device via a radio resource control (RRC) message;
receiving the positioning-assisted relevant information sent by the second terminal device via a PC5-S message; or
receiving the positioning-assisted relevant information sent by the second terminal device via a sidelink LTE positioning protocol (LPP) message.

13. A method for determining a positioning-assisted terminal device, performed by a second terminal device, comprising:
sending positioning-assisted relevant information to a first terminal device, wherein the positioning-assisted relevant information is used to indicate that the second terminal device is a positioning-assisted terminal device or a candidate positioning-assisted terminal device.

14. The method according to claim 13, wherein the positioning-assisted relevant information comprises type information of the second terminal device.

15. The method according to claim 14, wherein the type information of the second terminal device comprises at least one of:
roadside unit type information;
positioning-assisted terminal type information;
fixed positioning-assisted terminal type information;
infrastructure positioning-assisted terminal type information;
temporary positioning-assisted terminal type information; or
master positioning-assisted terminal type information.

16. The method according to claim 13, wherein the positioning-assisted relevant information comprises information related to position information of the second terminal device.

17. The method according to claim 16, wherein the information related to the position information of the second terminal device comprises at least one of:
having global positioning system (GPS) or global navigation satellite system (GNSS) capability information;
position information;
detailed position information;
GPS position information;
GNSS position information;
precise position information; or
reliable position information.

18. The method according to claim 13, wherein the positioning-assisted relevant information comprises auxiliary positioning type information supported by the second terminal device.

19. The method according to claim 18, wherein the auxiliary positioning type information supported by the second terminal device comprises at least one of:
an observed time difference of arrival (OTDOA);
an uplink time difference of arrival (UTDOA);
an angle-of-arrival (AOA);
an angle-of-departure (AOD);
an uplink angle-of-arrival (UL-AOA);
a downlink angle-of-departure (DL-AOD);
multiple round trip times (RTTs);
a single sided RTT;
a double sided RTT;
a downlink time difference of arrival (DL-TDOA);
an uplink time difference of arrival (UL-TDOA);
a carrier phase;
an enhanced cell identifier (ID);
assisted GNSS positioning;
wireless local area network (WLAN) positioning;
Bluetooth positioning;
barometer positioning;
sensor positioning;
ranging;
absolute positioning; or
relative positioning.

20. The method according to claim 13, wherein the positioning-assisted relevant information comprises information related to a network state of the second terminal device.

21. The method according to claim 20, wherein the information related to the network state of the second terminal device comprises at least one of:
a serving cell corresponding to the second terminal device;
information of the serving cell supporting sidelink communication or supporting sidelink communication of a limited service;
the serving cell being located on a frequency that supports sidelink communication;
on a frequency used for sidelink communication, the second terminal device being out of coverage;
network connection quality information;
network connection type information;
serving cell identifier; or
a message of the second terminal device performing sidelink communication.

22. The method according to claim 21, wherein the network connection type information comprises at least one of:
long term evolution (LTE) network connection;
new radio (NR) network connection;
fixed network connection; or
satellite network connection.

23. The method according to claim 21, wherein the serving cell identifier comprises at least one of:
physical cell identifier (PCI); or
global cell identifier (GCI).

24. The method according to claim 13, wherein sending the positioning-assisted relevant information to the first terminal device comprises at least one of:
sending the positioning-assisted relevant information to the first terminal device via a proximity service (ProSe) message;
sending the positioning-assisted relevant information to the first terminal device via a radio resource control (RRC) message;
sending the positioning-assisted relevant information to the first terminal device via a PC5-S message; or
sending the positioning-assisted relevant information to the first terminal device via a sidelink LTE positioning protocol (LPP) message.

25. An apparatus for determining a positioning-assisted terminal device, provided on a first terminal device side, comprising:
a receiving module configured to receive positioning-assisted relevant information sent by a second terminal device; and
a determining module configured to determine the second terminal device to be a positioning-assisted terminal device or a candidate positioning-assisted terminal device according to the positioning-assisted relevant information.

26. An apparatus for determining a positioning-assisted terminal device, provided on a second terminal device side, comprising:
a sending module configured to send positioning-assisted relevant information to a first terminal device, wherein the positioning-assisted relevant information is used to indicate that the second terminal device is a positioning-assisted terminal device or a candidate positioning-assisted terminal device.

27. A first terminal device, comprising:
a processor, and
a memory having stored therein a computer program that, when executed by the processor, causes the device to implement the method according to any one of claims 1 to 12.

28. A second terminal device, comprising:
a processor, and
a memory having stored therein a computer program that, when executed by the processor, causes the device to implement the method according to any one of claims 13 to 24.

29. A communication device, comprising a processor and an interface circuit;
wherein the interface circuit is configured to receive code instructions and transmit the code instructions to the processor; and
the processor is configured to run the code instructions to implement the method according to any one of claims 1 to 12.

30. A communication device, comprising a processor and an interface circuit;
wherein the interface circuit is configured to receive code instructions and transmit the code instructions to the processor; and
the processor is configured to run the code instructions to implement the method according to any one of claims 13 to 24.

31. A computer-readable storage medium having stored therein instructions that, when executed, cause the method according to any one of claims 1 to 12 to be implemented.

32. A computer-readable storage medium having stored therein instructions that, when executed, cause the method according to any one of claims 13 to 24 to be implemented.
